# EUROPEAN PATENT APPLICATION

(11) **EP 4 711 481 A1**
(43) Date of publication of application: **18.03.2026**
(21) Application number: 24803408.4
(22) Date of filing: 26.04.2024
(51) Int. Cl.: C22B 21/06, C22B 9/16

(54) **METHOD FOR REDUCING OR REMOVING SI, FE, AND CU IN ALUMINUM ALLOY**

(30) Priority: 10.05.2023 JP 2023077600
(71) Applicant: National University Corporation University of Toyama, Toyama-shi, Toyama 930-8555 (JP)
(72) Inventor: ONO Hideki, Toyama-shi, Toyama 930-8555 (JP); KATO Kengo, Toyama-shi, Toyama 930-8555 (JP); MIZUTANI Shoya, Toyama-shi, Toyama 930-8555 (JP)
(74) Representative: Wunderlich & Heim Patentanwälte PartG mbB
(86) International application number: PCT/JP2024/016393
(87) International publication number: WO 2024/232295

(57) **Abstract**

An objective is to provide a method for reducing or eliminating Si in aluminum alloys, and to be able to further reduce or eliminate Fe and Cu components.

A method for reducing or eliminating Si contained in an aluminum alloy including: holding the aluminum alloy and Sn at a melt temperature at which the aluminum alloy and Sn are melted; lowering the melt temperature, and holding the aluminum alloy and Sn at a Si crystallization temperature at which solid Si is crystallized while maintaining a molten state of Sn and Al, and separating the solid Si; and further lowering the temperature and holding the aluminum alloy and Sn at an Al crystallization temperature at which Al is crystallized and Sn is in the molten state, to separate and recover solid Al.

## Description

### TECHNICAL FIELD

The present invention relates to a method for reducing or eliminating alloying elements required for recycling of aluminum materials.

### BACKGROUND ART

A variety of alloying elements are added to aluminum alloys depending on the application of wrought materials, casting materials, and the like.

For the casting materials, relatively large amounts of Si are added for reasons such as improving the flowability of molten metal in casting, reducing the coefficient of thermal expansion, and improving wear resistance.

For example, in ADC12 (JISH 5302) alloy used as a die-casting alloy, it is specified as Si: 9.6 to 12.0%.

In addition, Cu has the effect of improving strength, and it is specified as Cu: 1.5 to 3.5%.

Although Fe component is an element that tends to mix into a molten metal during scrap recycling, it has the effect of reducing the burning to a mold, and in the case of ADC12 alloy, it is specified as Fe: 1.3% or less.

In any case, casting materials have a relatively large tolerance for additive elements and have a high recycling rate.

In contrast, wrought materials have a narrow tolerance range for alloying elements, which is one of the reasons why recycling of scrap materials has not improved.

For example, Patent Document 1 describes a method for reducing the iron content of aluminum alloys by adding manganese to a molten metal, and crystallizing and eliminating Fe as an intermetallic compound of the Al-Fe-Mn-Si system.

However, this separating the intermetallic compound uses induced current differences to move the intermetallic compound through an inhomogeneous magnetic field, and is not practical.

Non-Patent Document 1 proposes a molten salt electrolysis method in which only Al is moved to the cathode by using aluminum scrap as the anode in a molten salt and electrolyzing the aluminum scrap while the aluminum scrap remains solid, but this is not necessarily practical.

### RELATED-ART DOCUMENT

### PATENT DOCUMENT

Patent Document 1: JP-A-60-234930

### NON-PATENT DOCUMENT

Non-Patent Document 1: Development of New Sustainable Recycling Technology for Aluminum, Tohoku University, Press Release, April 26, 2022.
Non-Patent Document 2: A. J. McAlister and D. J. Kahan: Bulletin of Alloy Phase Diagram, 4(1983), 410.
Non-Patent Document 3: R. W. Olesinski and G. J. Abbaschian: Bulletin of Alloy Phase Diagram, 5(1984), 273
Non-Patent Document 4: C. P. Wang, M. S. Wang, Y. L. Deng, J. B. Zhang, S. Y. Yang, Y. X. Huang and X. J. Liu: Journal of Phase Equilibria and Diffusions, 43(2022), pp. 51-57
Non-Patent Document 5: H. R. KOTADIA, E. DOERNBERG, J. B. PATEL, Z. FAN, and R. SCHMID-FETZER: Metallurgical And Materials Transactions A, 40A(2009), 2202-2211.

### SUMMARY OF THE INVENTION

### TECHNICAL PROBLEM

An objective of the invention is to provide a method for reducing or eliminating Si in aluminum alloys, and to be able to further reduce or eliminate Fe and Cu components.

### SOLUTION TO PROBLEM

The method for reducing or eliminating Si in an aluminum alloy according to the invention includes: holding the aluminum alloy and Sn at a melt temperature at which the aluminum alloy and Sn are dissolved; lowering the melt temperature, and holding the aluminum alloy and Sn at a Si crystallization temperature at which solid Si is crystallized while maintaining a molten state of Sn and Al, and separating the solid Si; and further lowering the temperature and holding the aluminum alloy and Sn at an Al crystallization temperature at which Al is crystallized and Sn is in the molten state, to separate and recover solid Al.

Based on the phase diagram of Al and Sn disclosed in Non-Patent Document 2 and the phase diagram of Si and Sn disclosed in Non-Patent Document 3, the solubility curves of Al and Si in Sn are illustrated in FIG. 1.

Thus, in molten Sn at 873 K, about 50 mass% of Al is dissolved, but almost no Si is dissolved.

In addition, when the temperature of the molten Sn is lowered to 573 K, almost no Al is dissolved.

The invention focuses on this point, and when an aluminum alloy and Sn are heated and held at 873 K or more, both Al and Si are dissolved, but when the melt temperature is lowered to about 873 K, Si crystallizes and can be separated as solid Si, and when the melt temperature is further lowered to about 573 K, Al crystallizes, and can be separated and recovered as solid Al for recycling.

In addition, Sn can be used repeatedly.

The invention can also reduce Fe after eliminating Si in an aluminum alloy and includes: holding the aluminum alloy and Sn at a melt temperature at which the aluminum alloy and Sn are dissolved; lowering the melt temperature, and holding the aluminum alloy and Sn at a Si crystallization temperature at which solid Si and/or Al₃Fe is crystallized while maintaining a molten state of Sn, Al and Fe, and separating the solid Si; and further lowering the temperature, and crystallizing and separating Al and/or Al₃Fe while melting and holding Fe in molten Sn.

In addition, when the Si content in the aluminum alloy is low, the invention is a method for reducing or eliminating Fe contained in the aluminum alloy, and includes holding the aluminum alloy and Sn at a melt temperature at which the aluminum alloy and Sn are dissolved, and lower the melt temperature, and crystallize and separate Al and/or Al₃Fe while melting and holding Fe in molten Sn.

The invention can also reduce Cu after removing Si in an aluminum alloy and includes: holding the aluminum alloy and Sn at a melt temperature at which the aluminum alloy and Sn are dissolved; lowering the melt temperature, and holding the aluminum alloy and Sn at a Si crystallization temperature at which solid Si and/or Al₂Cu is crystallized while maintaining a molten state of Sn, Al, and Cu, and separating the solid Si; and further lowering the temperature, and crystallizing and separating Al and/or Al₂Cu while melting and holding Cu in molten Sn.

In addition, when the Si content in the aluminum alloy is low, a method for reducing or eliminating Cu contained in an aluminum alloy comprising:
holding the aluminum alloy and Sn at a melt temperature at which the aluminum alloy and Sn are dissolved; and
lowering the melt temperature, and crystallizing and separating Al and/or Al₂Cu while melting and holding Cu in molten Sn.

### ADVANTAGEOUS EFFECTS OF INVENTION

The invention can utilize the difference in solubility between Si and Al in molten Sn to separate and recover solid Al after separating solid Si, and since Sn can be used repeatedly, Si can be reduced or eliminated from aluminum scrap materials, thereby improving recyclability.

Fe and Cu can also be reduced.

### BRIEF DESCRIPTION OF THE DRAWINGS

FIG. 1 illustrates solubility curves of Al and Si in molten Sn using an Al-Si system alloy.
FIG. 2 is an illustrative drawing of a Si elimination process in an aluminum alloy using molten Sn.
FIG. 3A illustrates an experimental furnace and FIG. 3 B illustrates experimental conditions, when using an Al-Si system alloy.
FIG. 4 illustrates a phase diagram of Sn, Al, and Si, and experimental values.
FIG. 5 illustrates a liquidus projection diagram for an Al-Si-Sn system.
FIG. 6 illustrates a partial enlargement of FIG. 5.
FIG. 7 is an illustrative drawing of a Fe elimination process.
FIG. 8A illustrates an experimental furnace and FIG. 8B illustrates experimental conditions, when using an Al-Fe system alloy.
FIG. 9 illustrates a graph plotting experimental values of the amount of Al dissolved and Fe concentration in Sn bath.
FIG. 10 is an illustrative drawing of a Cu elimination process.

### DESCRIPTION OF EMBODIMENTS

A process is described, in which Si is first eliminated and Al is recovered using a melt (molten) Sn according to the invention.

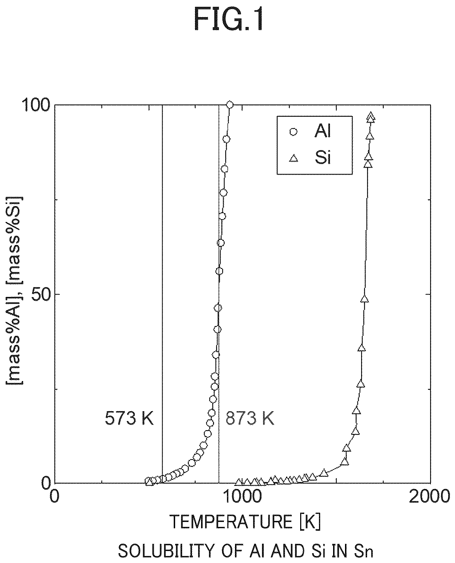

A melt temperature that an aluminum alloy and Sn are dissolved is a temperature of more than 873 K, e.g., a heating temperature of about 1000 K. In addition, in the molten Sn illustrated in FIG. 1, at about 873 K, about 50 mass% of Al is dissolved, but almost no Si is dissolved, and the melt temperature can become a crystallization temperature of solid Si; and when the temperature is lowered to about 573 K, almost no Al is dissolved and Al crystallizes and separates, and it can become a crystallization temperature of Al. The invention utilizes this phenomenon.

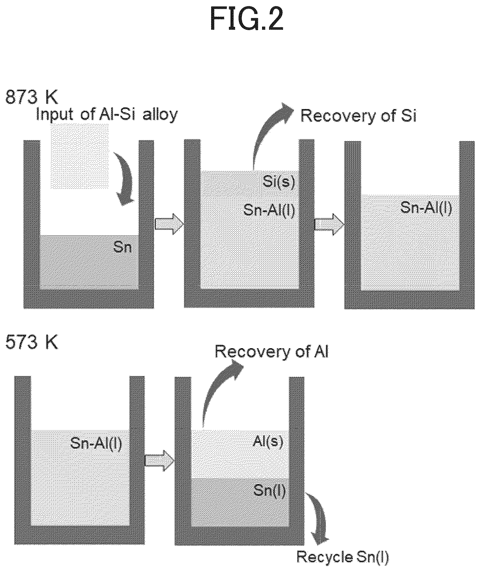

FIG. 2 is a schematic diagram of this process.
(1) Sn and an Al-Si system alloy (scrap material) are charged into a furnace which is heated to and held at a temperature of more than 873 K, e.g., about 1000 K, the whole mixture becoming in a molten state.
(2) When the above melt is gradually cooled to hold at 873 K, the solid Si is crystallized, separated and recovered.
(3) The remainder is a melt composed of Sn and Al, and when gradually cooled to 573 K, solid Al is crystallized, which is separated and recovered.
(4) The remaining Sn melt can be used repeatedly in the recycling process of aluminum scrap materials.

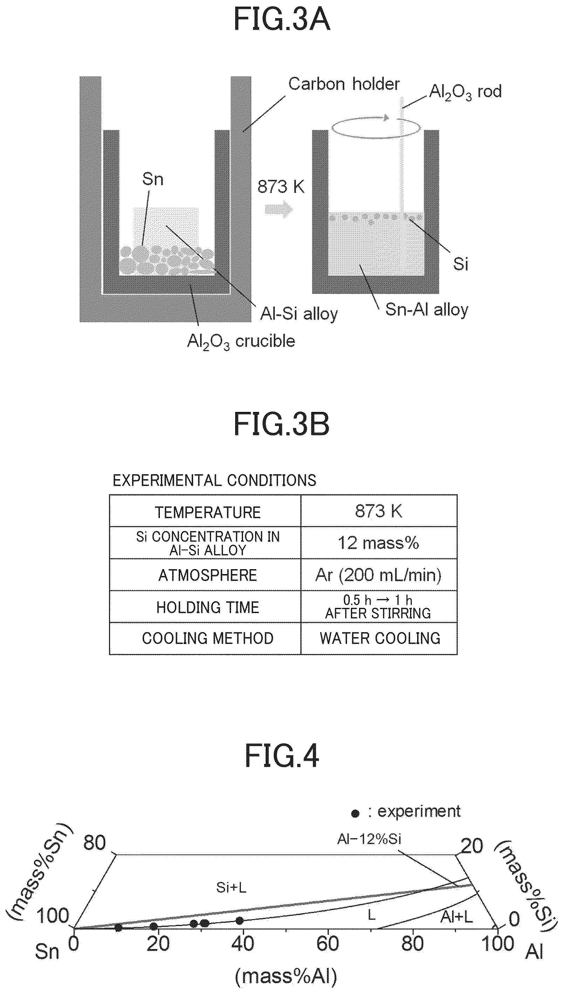

This process has been experimentally confirmed, and is described based on FIG. 3.

As illustrated in the schematic diagram of FIG. 3A, Sn and an Al-Si system alloy are charged into an Al₂O₃ furnace and heated.

A carbon holder was used for heat retention.

The Sn and the Al-Si system alloy were heated to a temperature of 10 to 200 K higher than 873 K, and stirred and dissolved with an Al₂O₃ rod.

Then, temperature was held at 873 K with stirring.

For the Al-Si system alloy, an alloy containing 12 mass% of Si was used, and the experiment was conducted in an Ar gas atmosphere as illustrated in FIG. 3B.

FIG. 4 illustrates a phase diagram of Sn, Al, and Si, and the experimental values of the amount of Al dissolved have been plotted on this diagram.

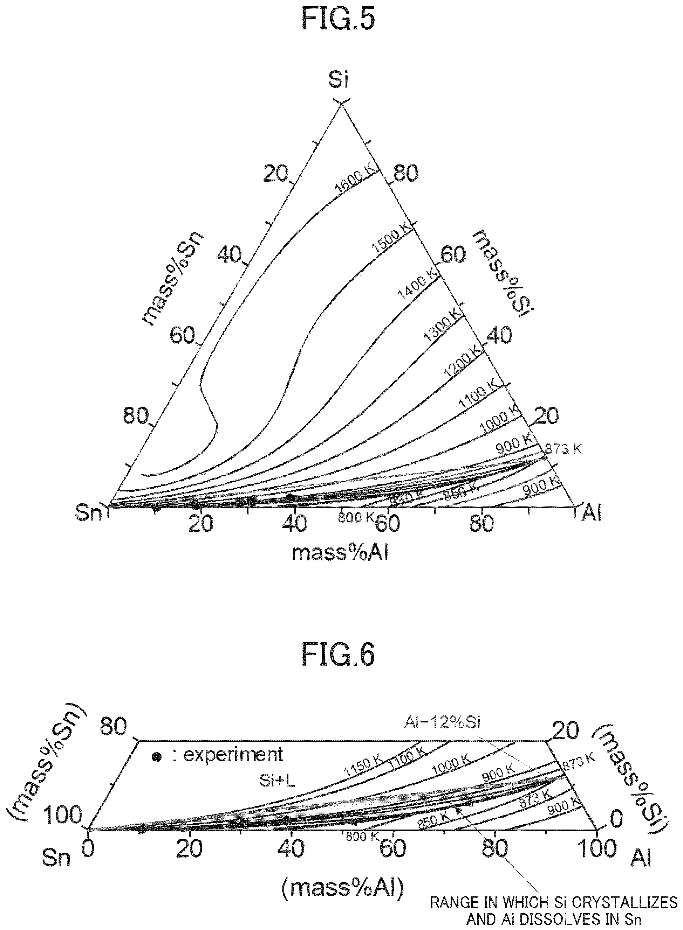

FIG. 5 illustrates a projection of the phase diagram for the Al-Si-Sn system, and FIG. 6 shows the range in which Si crystallizes and Al dissolves in molten Sn.

As a result, it can be seen that the range in which Al-12 mass% Si alloy dissolve in molten Sn is between 573 K or more and 1150 K or less.

Next, the phase diagrams for 800°C and 1000°C illustrated in Non-Patent Document 4 indicate that Al preferentially crystallizes when the alloy is cooled below the eutectic point of Al and Al₃Fe (1.8 mass% Fe).

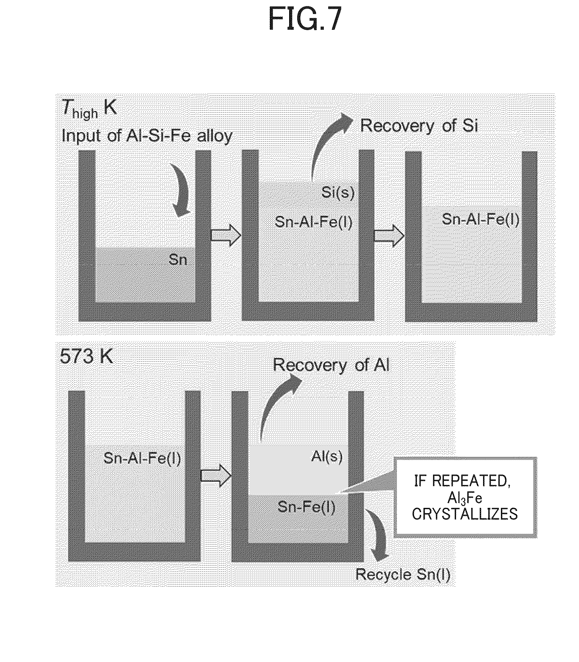

The process for reducing or eliminating Fe based on this is illustrated in FIG. 7.

After Si crystallizes at 873 K, when Fe is 1.8 mass% or less, Al and Fe dissolve in the molten Sn.

Next, when the alloy is cooled to 573 K, Fe remains in the molten Sn because the solubility of Fe in solid Al is very low.

If this process is repeated, the concentration of Fe in the molten Sn will increase, but it will crystallize as an Al₃Fe compound.

This allows Fe to be eliminated.

In addition, scrap materials with a low Si content can be held directly at 573 K to eliminate Fe in Al.

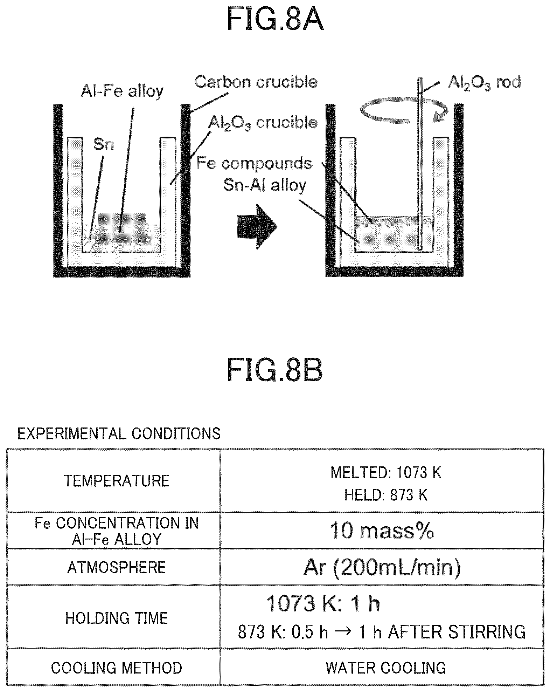

This process has been experimentally confirmed, and is described based on FIG. 8.

As illustrated in the schematic diagram of FIG. 8A, Sn and Al-Fe system alloy are charged into an Al₂O₃ crucible and heated.

A carbon holder (crucible) was used for heat retention.

The Sn and the Al-Fe system alloy were heated to a temperature of 10 to 200 K higher than 1273 K, and stirred and dissolved with an Al₂O₃ rod.

Then, the temperature was held at 873 K with stirring.

For the Al-Fe system alloy, an alloy containing 10 mass% of Fe was used, and the experiment was conducted in an Ar gas atmosphere as illustrated in FIG. 8B.

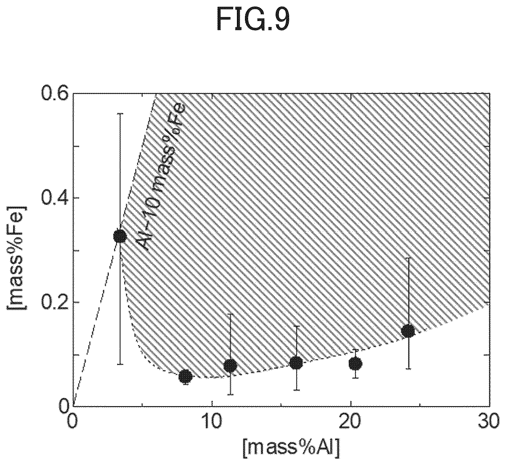

In FIG. 9, the experimental values of the amount of Al dissolved and the Fe concentration in the Sn bath were plotted.

When the Al content becomes higher than the initial concentration of the case that Al-10 mass% Fe alloy illustrated by a broken line is charged into a Sn bath, and when the Fe concentration is more than or equal to the solubility, i.e., under the condition of the hatched area in FIG. 9, the Fe concentration can be reduced.

Next, the range where Cu remains in the molten Sn and Al crystallizes, can be seen from the phase diagram described in Non-Patent Document 5.

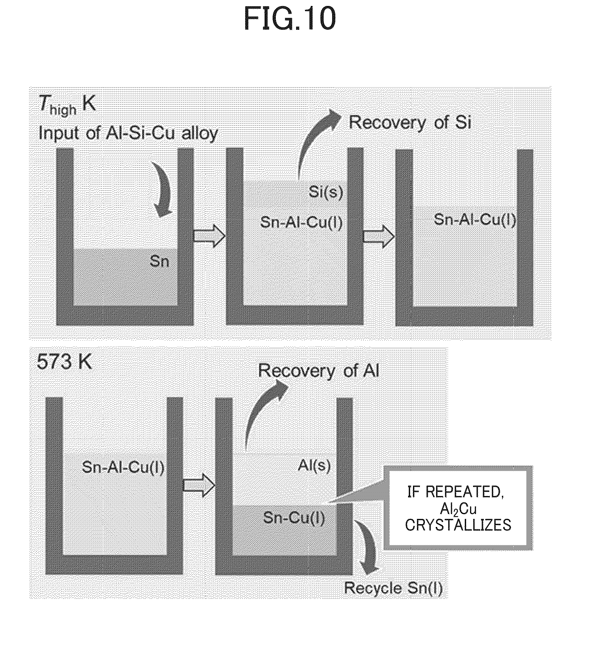

The process for eliminating Cu based on this is illustrated in FIG. 10.

When a temperature of the molten Sn is 573 K, Al crystallizes, but Cu dissolves in the molten Sn side.

When this process is repeated, and the Cu concentration in the molten Sn is 3.8 mass% or more, Cu crystallizes as a Al₂Cu compound.

It can be seen that this allows Cu to be eliminated.

In addition, even in the case of Cu, when the Si content is low, the melt temperature is held at 573 K, and Cu in Al may be eliminated by leaving Cu on the Sn side.

### INDUSTRIAL APPLICABILITY

The invention can eliminate impurities such as Si, Fe, and Cu in aluminum alloys by using molten Sn, and can be used to recycle aluminum scrap containing impurities into aluminum products with low impurity tolerance.

## Claims

1. A method for reducing or eliminating Si contained in an aluminum alloy comprising:
holding the aluminum alloy and Sn at a melt temperature at which the aluminum alloy and Sn are dissolved;
lowering the melt temperature, and holding the aluminum alloy and Sn at a Si crystallization temperature at which solid Si is crystallized while maintaining a molten state of Sn and Al, and
separating the solid Si; and
further lowering the temperature and holding the aluminum alloy and Sn at an Al crystallization temperature at which Al is crystallized and Sn is in the molten state, to separate and recover solid Al.

2. A method for reducing or eliminating Si and Fe contained in an aluminum alloy comprising:
holding the aluminum alloy and Sn at a melt temperature at which the aluminum alloy and Sn are dissolved;
lowering the melt temperature, and holding the aluminum alloy and Sn at a Si crystallization temperature at which solid Si and/or Al₃Fe is crystallized while maintaining a molten state of Sn, Al, and Fe, and separating the solid Si and/or Al₃Fe; and
further lowering the temperature, and crystallizing and separating Al and/or Al₃Fe while melting and holding Fe in molten Sn.

3. A method for reducing or eliminating Si and Cu contained in an aluminum alloy comprising:
holding the aluminum alloy and Sn at a melt temperature at which the aluminum alloy and Sn are dissolved;
lowering the melt temperature, and holding the aluminum alloy and Sn at a Si crystallization temperature at which solid Si and/or Al₂Cu is crystallized while maintaining a molten state of Sn, Al, and Cu, and separating the solid Si and/or Al₂Cu; and
further lowering the temperature, and crystallizing and separating Al and/or Al₂Cu while melting and holding Cu in molten Sn.

4. A method for reducing or eliminating Fe contained in an aluminum alloy comprising:
holding the aluminum alloy and Sn at a melt temperature at which the aluminum alloy and Sn are dissolved; and
lowering the melt temperature, and crystallizing and separating Al and/or Al₃Fe while melting and holding Fe in molten Sn.

5. A method for reducing or eliminating Cu contained in an aluminum alloy comprising:
holding the aluminum alloy and Sn at a melt temperature at which the aluminum alloy and Sn are dissolved; and
lowering the melt temperature, and crystallizing and separating Al and/or Al₂Cu while melting and holding Cu in molten Sn.
